# FASCICULE DE BREVET EUROPEEN

(11) **EP 1 163 437 B1**
(45) Date de publication et mention de la délivrance du brevet: **02.07.2003**
(21) Numéro de dépôt: 00910975.2
(22) Date de dépôt: 17.03.2000
(51) Int. Cl.: F02D 41/14, F02D 13/02, F01L 9/04

(54) **PROCEDE DE REGULATION DU REGIME DE RALENTI D'UN MOTEUR A COMBUSTION A SOUPAPES SANS ARBRES A CAMES**
METHODE FÜR DAS REGELN DER LEERLAUFDREHZAHL EINER VERBRENNUNGSMASCHINE MIT VENTILEN OHNE NOCKENWELLEN
METHOD FOR REGULATING THE IDLE SPEED ON AN INTERNAL COMBUSTION ENGINE WITH CAMLESS VALVES

(30) Priorité: 23.03.1999 FR 9903565
(43) Date de publication de la demande: 19.12.2001
(73) Titulaire: Renault s.a.s., 92100 Boulogne Billancourt (FR)
(72) Inventeur: FERNANDEZ, Alain, F-91150 Etampes (FR)
(86) Numéro de dépôt international: FR0000652
(87) Numéro de publication internationale: WO00057046

(56) Documents cités:
- EP-A- 0 560 476
- EP-A- 0 808 997
- PATENT ABSTRACTS OF JAPAN vol. 1998, no. 03, 27 février 1998 (1998-02-27) & JP 09 287487 A (NISSAN MOTOR CO LTD), 4 novembre 1997 (1997-11-04)
- PATENT ABSTRACTS OF JAPAN vol. 015, no. 085 (M-1087), 27 février 1991 (1991-02-27) & JP 02 305307 A (HONDA MOTOR CO LTD), 18 décembre 1990 (1990-12-18)

## Description

La présente invention concerne un moteur à combustion, notamment un moteur thermique de véhicule automobile.

L'invention concerne plus particulièrement un procédé de commande d'un moteur à combustion à quatre temps en vue de la régulation du régime de ralenti du moteur.

L'invention concerne plus particulièrement un moteur à combustion dont les soupapes d'admission et d'échappement de chaque cylindre sont chacune commandées individuellement au moyen d'un actionneur linéaire, notamment d'un actionneur électromagnétique, chaque actionneur d'une soupape étant relié à une unité électronique de commande du moteur.

Un tel moteur à combustion sans arbres à cames, aussi appelé moteur "camless", offre de grandes possibilités pour la commande individualisée des soupapes d'admission et d'échappement indépendamment du ou des diagrammes généraux de distribution du moteur.

L'invention vise à proposer un procédé de commande d'un tel moteur sans arbres à cames en vue de la régulation du régime de ralenti du moteur.

Dans ce but, invention propose un procédé de commande d'un moteur à combustion à quatre temps du type comportant un circuit d'admission d'air ou de mélange air/carburant et un circuit d'échappement de gaz brûlés qui communiquent avec une chambre de combustion d'au moins un cylindre du moteur, du type dans lequel les communications des circuits d'admission et d'échappement avec la chambre sont susceptibles d'être obturées chacune respectivement au moins une soupape, respectivement d'admission et d'échappement, à ouverture commandée par un actionneur linéaire, notamment par un actionneur électromagnétique, relié à une unité électronique de commande, caractérisé en ce que, au cours d'un cycle déterminé, il consiste successivement à :
- a) estimer la valeur du couple instantané, résultant de la combustion en cours, après le point mort haut et avant l'instant d'ouverture de la soupape d'échappement ;
- b) comparer cette valeur estimée du couple par rapport à une valeur nominale désirée du couple instantané pour déterminer un écart éventuel entre ces deux valeurs du couple instantané ;
-c) modifier l'instant d'ouverture de la soupape d'échappement par rapport à un instant d'ouverture nominale de la soupape d'échappement en fonction dudit écart de couple, ledit instant d'ouverture nominale étant retardé par rapport à un instant d'ouverture optimale correspondant à un rendement optimal pour le point de fonctionnement considéré du cylindre.

Grâce à un tel procédé, il est ainsi possible de réguler le régime de ralenti du moteur en agissant cylindre par cylindre au cours de chaque cycle et avant la fin du cycle considéré.

Selon d'autres caractéristiques de l'invention :
- la modification de l'instant d'ouverture de la soupape d'échappement vise à avancer l'instant d'ouverture de la soupape d'échappement par rapport à l'instant d'ouverture nominale pour augmenter le couple fourni au cours du cycle ;
- la modification de l'instant d'ouverture de la soupape d'échappement vise à retarder l'instant d'ouverture de la soupape d'échappement par rapport à l'instant d'ouverture nominale pour réduire le couple fourni au cours du cycle ;
- le procédé consiste à modifier le remplissage du cylindre au cours du cycle suivant en vue d'accroître, ou inversement de réduire, la masse d'air ou de mélange air/carburant admise dans le cylindre ;
- le procédé consiste à modifier l'instant de fermeture de la soupape d'admission par rapport à un instant de fermeture nominale de la soupape d'admission ;
- dans le cas d'une stratégie avec retard de fermeture à l'admission (RFA), l'instant de fermeture nominale de la soupape d'admission est avancé par rapport au point mort bas, et le retard à la fermeture est réduit pour accroître la masse d'air ou de mélange air/carburant admise dans le cylindre ;
- dans le cas d'une stratégie avec avance de fermeture à l'admission (AFA), l'instant de fermeture nominale de la soupape d'admission est avancé par rapport au point mort bas, et en ce que l'avance à la fermeture est réduite pour accroître, ou inversement pour réduire, la masse d'air ou de mélange air/carburant admise dans le cylindre ;
- le procédé consiste à réduire la quantité des gaz résiduels dans le cylindre, par exemple en réduisant le croisement entre les soupapes d'échappement et d'admission lors du passage au cycle suivant.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe d'une partie d'un moteur à combustion interne à soupapes et sans arbres à cames et commandé selon un procédé conforme aux enseignements de l'invention ;
- la figure 2 est un diagramme de distribution d'un moteur à quatre temps ; et
- la figure 3 est un diagramme pression-volume d'un moteur à quatre temps.

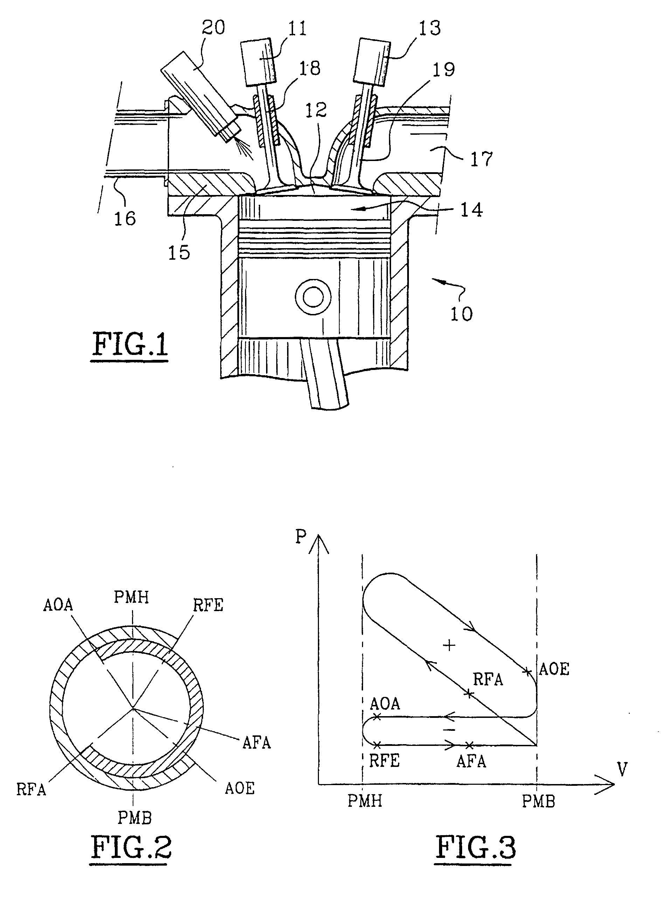

On a représenté sur la figure 1 un cylindre 10 d'un moteur à combustion interne à quatre temps et dont la partie supérieure forme une chambre de combustion 12 délimitée par un piston mobile 14 et par une culasse 15.

Le cylindre 10 est alimenté en mélange air/carburant par un circuit d'admission 16 qui débouche dans la chambre de combustion 12 au travers d'une soupape d'admission 18 dont les déplacements sont commandés par un actionneur électromagnétique linéaire 11 afin d'obturer ou non la communication entre le circuit d'admission 16 et la chambre de combustion 12.

Un circuit d'échappement 17 est prévu pour l'évacuation des gaz brûlés hors de la chambre de combustion 12 au travers d'une soupape d'échappement 19 également commandée par un actionneur linéaire électromagnétique 13.

La commande des soupapes d'admission 18 et d'échappement 19 est assurée par une unité électronique de commande (non représentée) qui pilote les actionneurs 11 et 13, et qui commande aussi l'injection de carburant, ici indirecte, au moyen d'un injecteur 20, de même que l'allumage au moyen d'une bougie (non représentée).

L'unité électronique de commande comporte notamment des moyens de mémorisation d'une ou plusieurs cartographies de fonctionnement du moteur dont chacune détermine les différents paramètres et états du moteur pour une gamme de points de fonctionnement, en vue notamment de déterminer le régime de rotation du moteur, la charge de chaque cylindre, etc.

L'unité électronique de commande reçoit des signaux représentatifs de paramètres de fonctionnement tels que le régime du moteur, la pression atmosphérique, la pression dans chaque cylindre, le débit des gaz d'admission et/ou d'échappement, le couple instantané fourni, etc.

Selon le principe du cycle à quatre temps d'un moteur à combustion, celui-ci s'effectue en deux rotations du vilebrequin et en quatre courses du piston, les quatre temps du cycle étant l'admission, la compression, la combustion et l'échappement.

En considérant la représentation simplifiée du cylindre de la figure 1 comportant, à titre d'exemple, une soupape d'admission 18 et une soupape d'échappement 19, lors de l'admission, la soupape d'admission 18 est ouverte et le piston descend. L'augmentation du volume V du cylindre crée une dépression qui provoque l'aspiration du mélange air/carburant.

L'ouverture OA de la soupape d'admission 18 s'effectue généralement, comme on peut le voir sur le diagramme de distribution de la figure 2, en avance par rapport au point mort haut PMH du piston, c'est-à-dire à un instant d'ouverture AOA.

La fermeture FA de la soupape d'admission 18 se produit généralement avec un retard par rapport au point mort bas PMB du piston, c'est-à-dire à un instant de fermeture RFA.

La valeur de l'angle AOA est par exemple comprise entre 0° et 45° tandis que l'angle RFA est compris entre 30° et 90°.

Lors de la compression, les soupapes d'admission 18 et d'échappement 19 sont fermées et le piston monte et comprime le mélange dans la chambre d'explosion, la pression P qui règne dans la chambre de combustion en fin de compression étant appelée pression de compression. Quelques degrés avant le point mort haut PMH, l'allumage se produit en un instant où point d'allumage dont l'avance par rapport au point mort haut PMH est comprise entre 0° et 40°.

Lors de l'explosion, combustion puis détente, le piston est poussé vers le bas de sa course sous l'action des gaz et, quelques degrés avant le point mort bas PMB, la soupape d'échappement s'ouvre provoquant une chute de la pression dans le cylindre. L'ouverture OE de la soupape d'échappement 19 se produit généralement en avance par rapport au point mort bas PMB, c'est-à-dire à l'instant AOE représenté sur le diagramme de distribution, l'angle d'ouverture AOE étant par exemple compris entre 10° et 90°.

Lors de l'échappement, la soupape d'échappement 19 est ouverte, le piston monte et balaie le cylindre. La fermeture FE de la soupape d'échappement 19 se produit à nouveau avec retard par rapport au point mort haut PMH, c'est-à-dire à un instant RFE, l'angle de retard RFE étant par exemple compris entre 0° et 30°.

Lors du passage d'un cycle déterminé au cycle suivant, il se produit un croisement AOA-PMH-RFE des soupapes qui est illustré à la figure 2.

Le croisement des soupapes est déterminé de manière à réaliser le balayage et le refroidissement de la chambre d'explosion et la mise en mouvement du mélange carburé.

L'ouverture OE de la soupape d'échappement a toujours lieu avant le point mort bas PMB et elle est destinée à abaisser la pression interne du cylindre avant que le piston atteigne le point mort bas PMB, de manière à éviter la contre-pression qui ralentirait la montée du piston. L'angle d'avance AOE est donc d'autant plus grand que le moteur est conçu pour fonctionner à régime plus élevé.

Pour un cylindre donné, la PME, c'est-à-dire le couple, produite lors de chaque combustion se répartit suivant une courbe de Gauss autour d'une valeur nominale qui correspond au point de fonctionnement considéré du moteur, c'est-à-dire qui correspond à une charge et à un régime déterminés.

Lorsque le moteur fonctionne au ralenti, c'est-à-dire à faible charge, la courbe de Gauss est particulièrement étalée ou aplatie, c'est-à-dire qu'il y a de grandes dispersions de la PME d'un cycle à l'autre. Il en résulte pour l'utilisateur un phénomènes d'instabilité ou de pompage du régime.

D'une manière connue, il est ainsi nécessaire de réguler le moteur pour son régime de ralenti.

La solution la plus répandue consiste à corriger l'avance à l'allumage pour obtenir une correction rapide, pui à agir sur le remplissage du cylindre si l'on désire obtenir une correction plus lente.

Cette solution connue qui est notamment mise en oeuvre dans les moteurs à arbres à cames, a pour inconvénient d'agir avec un certain retard.

En effet, si l'on détermine qu'un cycle n est par exemple trop énergétique, la correction envisagée consiste à dégrader l'avance lors du cycle suivant n+1, voire lors de plusieurs cycles suivants consécutifs.

L'invention vise à remédier à cet inconvénient grâce à un procédé permettant, dans le cas d'un moteur à combustion à commande indépendante des soupapes, d'effectuer une correction en vue de faire varier la PME à l'intérieur même d'un cycle déterminé du cylindre.

En se reportant au diagramme de la figure 3, qui est un diagramme pression-volume permettant de visualiser les variations de la pression agissant dans la chambre de combustion en fonction du volume V, c'est à dire de la position du piston dans le cylindre, on peut définir la PME pour un cycle comme étant la différence entre l'aire positive, marquée d'un signe "+", et l'aire négative, marqué d'un signe "-", délimitées par la courbe du diagramme sur lequel on a par ailleurs indiqué, à titre d'exemple, les instants avancés AOE et AOA d'ouverture des soupapes d'échappement et d'admission, l'instant retardé RFE ainsi que les instants retardés ou avancés de fermeture des soupapes d'admission.

En effet, pour un point de fonctionnement donné, la PME nominale dépend directement des instants d'ouverture et de fermeture des soupapes d'admission 18 et d'échappement 19.

Il est notamment possible, avant la fin de chaque cycle, d'agir sur la PME du cycle considéré en modifiant notamment les instants OE et FE d'ouverture et de fermeture de la soupape d'échappement 19.

L'instant OE d'ouverture de la soupape d'échappement 19 est celui qui a le plus d'impact sur la PME.

Si l'on appelle oenom l'instant d'ouverture nominale de la soupape d'échappement, c'est à dire l'instant d'ouverture cartographié, et que cet instant d'ouverture ne correspond pas à l'instant d'ouverture optimal oeopt de la soupape d'échappement correspondant au rendement optimal du cylindre, mais qu'il est retardé par rapport à l'instant d'ouverture nominal, il existe alors un écart à l'ouverture Eouv entre ces deux instants et le procédé selon l'invention propose de faire varier cet écart pour faire varier la PME nominale en vue de la régulation du régime de ralenti du moteur.

La réduction de cet écart Eouv ou décalage permet d'augmenter la PME, la combustion n'étant alors pas assez énergétique, tandis que l'augmentation de cet écart permet de réduire la PME, par une combustion trop énergétique.

Le procédé selon l'invention propose ainsi, lors d'un cycle de commencer par estimer la valeur instantanée du couple Cest produit par la combustion au cours de ce cycle, et ceci après le point mort haut PMH et avant l'instant d'ouverture de la soupape d'échappement 19.

Le couple instantané peut être estimé par exemple par la mesure directe du couple ou à partir d'un paramètre tel que la pression P dans le cylindre.

On procède ensuite à la comparaison de la valeur estimée du couple Cest avec la valeur nominale désirée Cnom du couple instantané et l'on en déduit un écart éventuel Ecpl entre ces deux valeurs.

Cette comparaison étant effectuée au cours du cycle et avant l'ouverture de la soupape d'échappement, il est alors possible de modifier l'instant OE d'ouverture de la soupape d'échappement par l'actionneur 13 en fonction de l'écart de couple qui vient d'être déterminé, c'est à dire de décaler, en avance ou en retard, l'instant réel d'ouverture OE de la soupape d'échappement par rapport à l'instant d'ouverture nominale oenom.

En effet, comme cela a été expliqué précédemment, ces deux sens possibles de modification permettent d'agir positivement ou négativement sur la PME.

Grâce au procédé selon l'invention, il est ainsi possible d'obtenir une correction sur le cycle en cours.

Selon un autre aspect de l'invention, il est souhaitable de pouvoir effectuer une correction dite lente, car la correction dite rapide conforme au procédé selon l'invention qui vient d'être expliquée est limitée du point de vue de l'amplitude de la correction, notamment lorsqu'il s'agit d'augmenter la PME car cette faculté d'augmentation est limitée par l'écart Eouv entre l'instant d'ouverture nominale EOnom et l'instant d'ouverture optimale. EOopt.

Si l'on souhaite remédier à une dégradation importante de la PME, il est nécessaire de mettre en oeuvre une stratégie complémentaire dite de boucle lente, au cours de laquelle la correction est effectuée sur les cycles suivants en accroissant la charge admise dans le cylindre, c'est-à-dire en accroissant son remplissage.

Selon un premier aspect de cette stratégie complémentaire mise en oeuvre dans le cadre du procédé selon invention, on modifie l'instant FA de fermeture de la soupape d'admission.

Si le diagramme de distribution prévoit un instant de fermeture nominale de la soupape d'admission qui est retardé par rapport au point mort bas PMB, on décale cet instant de fermeture retardée RFA en diminuant ce retard pour accroître le remplissage du cylindre en permettant un accroissement de la masse d'air admise dans le cylindre.

Si le diagramme de distribution prévoit un instant de fermeture nominale de la soupape d'admission qui est avancé par rapport au point mort bas, on décale cet instant de fermeture avancée AFA en réduisant l'avance.

Quel que soit le diagramme nominal de distribution, la correction lente ainsi apportée au cours du cycle suivant, ou au cours d'une série de cycles suivants, modifie l'instant de fermeture de la soupape d'admission.

Selon un deuxième aspect de la stratégie complémentaire mise en oeuvre dans le procédé selon l'invention, on réduit la quantité des gaz brûlés résiduels dans le cylindre à l'issue du cycle.

Cette réduction peut-être réalisée selon de nombreux principes connus.

Par exemple, lorsque le diagramme de distribution prévoit un croisement AOA-PMH-RFE des soupapes, une possibilité de réduction des gaz résiduels consiste à réduire l'angle de croisement des soupapes.

L'apprentissage de la correction doit pouvoir se faire dans les deux sens pour prendre notamment en compte la variation de température de l'huile du moteur qui induit une variation des frottements et donc du régime de ralenti.

Les principes mis en oeuvre dans le cadre du procédé selon l'invention qui ont été expliqués en considérant un seul cylindre comportant lui-même une seule soupape d'admission et une seule soupape d'échappement s'appliquent bien entendu à un moteur à plusieurs cylindres dont chacun comporte le cas échéant plusieurs soupapes d'admission et plusieurs soupapes d'échappement dont chacune est commandée individuellement par l'unité électronique de commande au moyen d'un actionneur linéaire individuel associé à chaque soupape.

La stratégie consistant à effectuer la correction au cours même d'un cycle donné permet de réaliser un apprentissage cylindre par cylindre de la correction permettant d'obtenir la régulation du couple moteur au régime de ralenti, et notamment aux faibles charges.

Si une correction sur un même cylindre s'avère nécessaire sur plusieurs cycles consécutifs, ou sur un pourcentage de cycles défini, une correction permanente du réglage nominal peut-être calculée et appliquée au cylindre considéré par exemple en agissant sur son remplissage par modification de l'instant FA de fermeture de l'admission, ou en agissant sur la recirculation des gaz brûlés en modifiant l'avance à l'ouverture de l'admission et/ou le retard à la fermeture de l'échappement en fonction du principe retenu pour gérer les gaz brûlés.

Si la correction dépasse des seuils prédéfinis, elle est alors le signe d'un dysfonctionnement de la commande d'une ou plusieurs soupapes et elle peut constituer un moyen de détection et/ou d'alerte pour le calculateur de contrôle moteur, ou au tableau de bord pour le conducteur de véhicule.

## Revendications

1. Procédé de commande d'un moteur à combustion à quatre temps en vue de la régulation du régime de ralenti du moteur, du type comportant un circuit d'admission (16) d'air ou de mélange air/carburant et un circuit d'échappement (17) de gaz brûlés qui communiquent avec une chambre de combustion (12) d'au moins un cylindre (10) du moteur, du type dans lequel les communications des circuits d'admission (16) et d'échappement (17) avec la chambre (12) sont susceptibles d'être obturées chacune respectivement par au moins une soupape, respectivement d'admission (18) et d'échappement (19), à ouverture commandée par un actionneur linéaire, notamment par un actionneur électromagnétique, relié à une unité électronique de commande, **caractérisé en ce que**, au cours d'un cycle déterminé, il consiste à successivement :
- a) estimer la valeur du couple instantané (Cest), résultant de la combustion en cours, après le point mort haut (PMH) et avant l'instant d'ouverture (OE) de la soupape d'échappement (19) ;
-b) comparer cette valeur estimée du couple (Cest) par rapport à une valeur nominale désirée (Cnom) du couple instantané pour déterminer un écart éventuel (Ecpl) entre ces deux valeurs du couple instantané ;
-c) modifier l'instant d'ouverture (OE) de la soupape d'échappement (19) par rapport à un instant d'ouverture nominale (OEnom) de la soupape d'échappement (19) en fonction dudit écart de couple (Ecpl), ledit instant d'ouverture nominale (OEnom) étant retardé par rapport à un instant d'ouverture optimale (OEopt) correspondant à un rendement optimal pour le point de fonctionnement considéré du cylindre.

2. Procédé selon la revendication précédente, **caractérisé en ce que** la modification de l'instant d'ouverture (OE) de la soupape d'échappement (19) vise à avancer l'instant d'ouverture de la soupape d'échappement (19) par rapport à l'instant d'ouverture nominale (OEnom) pour augmenter le couple fourni au cours du cycle.

3. Procédé selon la revendication1, **caractérisé en ce que** la modification de l'instant d'ouverture (OE) de la soupape d'échappement (19) vise à retarder l'instant d'ouverture de la soupape d'échappement (19) par rapport à l'instant d'ouverture nominale (OEnom) pour réduire le couple fourni au cours du cycle.

4. Procédé selon l'une quelconque des revendications précédentes, **caractérisé en ce qu'**il consiste à modifier le remplissage du cylindre au cours du cycle suivant en vue d'accroître ou de réduire la masse d'air ou de mélange air/carburant admise dans le cylindre.

5. Procédé selon la revendication précédente, **caractérisé en ce qu'**il consiste à modifier l'instant de fermeture (FA) de la soupape d'admission (18) par rapport à un instant de fermeture nominale (FAnom) de la soupape d'admission (18).

6. Procédé selon la revendication précédente, **caractérisé en ce que** l'instant de fermeture nominale (FAnom) de la soupape d'admission (18) est avancé par rapport au point mort bas (PMB), et **en ce que** le retard à la fermeture (RFA) est réduit pour accroître, ou inversement pour réduire, la masse d'air ou de mélange air/carburant admise dans le cylindre.

7. Procédé selon la revendication 5, **caractérisé en ce que** l'instant de fermeture nominale (FAnom) de la soupape d'admission (18) est avancé par rapport au point mort bas (PMB), et **en ce que** l'avance à la fermeture (AFA) est réduite pour accroître, ou inversement pour réduire, la masse d'air ou de mélange air/carburant admise dans le cylindre.

8. Procédé selon la revendication 4, **caractérisé en ce qu'**il consiste à réduire la quantité des gaz résiduels dans le cylindre, par exemple en réduisant le croisement (AOA-PMH-RFE) entre les soupapes d'échappement et d'admission lors du passage au cycle suivant.

## Patentansprüche

1. Verfahren zur Steuerung eines Viertakt-Verbrennungsmotors hinsichtlich der Regelung der Leerlaufdrehzahl, der einen Einlasskreis (16) für Luft oder ein Luft/Kraftstoff-Gemisch aufweist und einen Auslasskreis (17) für die Abgase, die mit einer Verbrennungskammer (12) wenigstens eines der Zylinder (10) des Motors in Verbindung stehen, wobei die Verbindungsleitungen der Einlass- und Auslasskreise (16 bzw. 17) mit der Kammer (12) einzeln mittels eines Einlass- bzw. Auslassventils (18 bzw. 19) verschließbar sind und das Öffnen mittels eines linearen Stellgliedes gesteuert wird, insbesondere eines elektromagnetischen Stellgliedes, das mit einer elektronischen Steuereinheit verbunden ist, **dadurch gekennzeichnet, dass** es während eines vorgegebenen Zyklus darin besteht, dass nacheinander:
- a) der Wert des momentanen aus der aktuellen Verbrennung resultierenden Momentes (Cest) nach dem oberen Totpunkt (PMH) und vor dem Zeitpunkt (OE) des Öffnens des Auslassventils (19) ermittelt wird;
- b) dieser ermittelte Wert (Cest) für das Moment mit einem gewünschten nominalen Wert (Cnom) des nominalen Momentes verglichen wird zur Bestimmung einer eventuellen Abweichung (Ecpl) zwischen den beiden Werten für das momentane Moment;
- c) der Zeitpunkt (OE) des Öffnens des Auslassventils (19) bezüglich eines nominalen Zeitpunktes (OEnom) des Öffnens des Auslassventils (19) als Funktion dieser Abweichung (Ecpl) des Momentes verändert wird, wobei der nominale Zeitpunkt (OEnom) des Öffnens nachverlegt wird bezüglich eines optimalen Zeitpunktes (OEopt) des Öffnens entsprechend einer optimalen Leistung für den betrachteten Betriebspunkt des Zylinders.

2. Verfahren nach dem vorhergehenden Anspruch, **dadurch gekennzeichnet, dass** die Veränderung des Zeitpunktes (OE) des Öffnens des Auslassventils (19) darauf abzielt, den Zeitpunkt des Öffnens des Auslassventils (19) bezüglich des nominalen Zeitpunktes (OEnom) des Öffnens vorzuverlegen um das während des Zyklus abgegebene Moment zu erhöhen.

3. Verfahren nach Anspruch 1, **dadurch gekennzeichnet, dass** die Veränderung des Zeitpunktes (OE) des Öffnens des Auslassventils(19) darauf abzielt, den Zeitpunkt des Öffnens des Auslassventils (19) bezüglich des nominalen Zeitpunktes (OEnom) nachzuverlegen um das während des Zyklus abgegebene Moment zu verringern.

4. Verfahren nach einem der vorhergehenden Ansprüche, **dadurch gekennzeichnet, dass** es darin besteht, die Füllung des Zylinders während des nachfolgenden Zyklus dadurch zu verändern, dass die dem Zylinder zugeführte Menge an Luft oder Luft/Kraftstoff - Gemisch vergrößert oder verkleinert wird.

5. Verfahren nach dem vorhergehenden Anspruch, **dadurch gekennzeichnet, dass** es darin besteht, den Zeitpunkt (FA) des Schließens des Einlassventils (18) zu verändern bezüglich eines nominalen Zeitpunktes (FAnom) des Schließens des Einlassventils (18).

6. Verfahren nach dem vorhergehenden Anspruch, **dadurch gekennzeichnet, dass** der nominale Zeitpunkt (FAnom) des Einlassventils (18) bezüglich des unteren Totpunktes (PMB) vorverlegt wird und dass die Nachverlegung (RFA) während des Schließens verringert wird um die dem Zylinder zugeführte Menge an Luft oder Luft/Kraftstoff - Gemisch zu vergrößern oder, umgekehrt, zu verkleinern.

7. Verfahren nach Anspruch 5, **dadurch gekennzeichnet, dass** der nominale Zeitpunkt (FAnom) des Einlassventils (18) bezüglich des unteren Totpunktes (PMB) vorverlegt wird und dass die Vorverlegung (AFA) während des Schließen verringert wird um die dem Zylinder zugeführte Menge an Luft oder Luft/Kraftstoff - Gemisch zu vergrößern oder, umgekehrt, zu verkleinern.

8. Verfahren nach Anspruch 4, **dadurch gekennzeichnet, dass** es darin besteht, die Menge der im Zylinder verbleibenden Restgase zu reduzieren , zum Beispiel durch Verkleinerung der Überkreuzung (AOA - PMH - RFE) zwischen dem Auslassventil und dem Einlassventil während des Übergangs zum nachfolgenden Zyklus.

## Claims

1. A process for controlling a four-stroke internal combustion engine for the purposes of regulating the idle condition of the engine, of the type comprising an air or air/fuel mixture induction circuit (16) and a burnt gas exhaust circuit (17) which communicate with a combustion chamber (12) of at least one cylinder (10) of the engine, of the type in which the communications of the induction (16) and exhaust (17) circuits with the chamber (12) are each capable of being closed by at least one inlet (18) and exhaust (19) valve respectively with opening controlled by a linear actuator, in particular by an electromagnetic actuator connected to an electronic control unit, **characterised in that** in the course of a given cycle it comprises successively:
- a) estimating the value of the instantaneous torque (Cest) resulting from the combustion which is in progress after the top dead centre point (TDC) and before the opening time (OE) of the exhaust valve (19);
- b) comparing said estimated value of the torque (Cest) with respect to a desired nominal value (Cnom) of the instantaneous torque to determine a possible difference (Ecpl) between said two values of the instantaneous torque; and
- c) modifying the opening time (OE) of the exhaust valve (19) with respect to a nominal opening time (OEnom) of the exhaust valve (19) in dependence on said torque difference (Ecpl), said nominal opening time (OEnom) being retarded with respect to an optimum opening time (OEopt) corresponding to an optimum output for the operating point being considered of the cylinder.

2. A process according to the preceding claim **characterised in that** the modification to the opening time (OE) of the exhaust valve (19) aims to advance the opening time of the exhaust valve (19) with respect to the nominal opening time (OEnom) to increase the torque produced in the course of the cycle.

3. A process according to claim 1 **characterised in that** the modification to the opening time (OE) of the exhaust valve (19) aims to retard the opening time of the exhaust valve (19) with respect to the nominal opening time (OEnom) to reduce the torque produced in the course of the cycle.

4. A process according to any one of the preceding claims **characterised in that** it comprises modifying filling of the cylinder in the course of the following cycle for the purpose of increasing or reducing the mass of air or air/fuel mixture passed into the cylinder.

5. A process according to the preceding claim **characterised in that** it comprises modifying the closure time (CI) of the inlet valve (18) with respect to a nominal closure time (CInom) of the inlet valve (18).

6. A process according to the preceding claim **characterised in that** the nominal closure time (CInom) of the inlet valve (18) is advanced with respect to the bottom dead centre point (BDC) and that the closure retard (RCI) is reduced to increase or conversely to reduce the mass of air or air/fuel mixture passed into the cylinder.

7. A process according to claim 5 **characterised in that** the nominal closure time (CInom) of the inlet valve (18) is advanced with respect to the bottom dead centre point-(BDC) and that the closure advance (ACI) is reduced to increase or conversely to reduce the mass of air or air/fuel mixture passed into the cylinder.

8. A process according to claim 4 **characterised in that** it comprises reducing the amount of residual gases in the cylinder, for example by reducing the overlap (AOI-TDC-RCE) between the exhaust and inlet valves when passing to the following cycle.
